(19) Europäisches Patentamt
European Patent Office
Office européen des brevets

(11) **EP 3 145 069 B1**

(12) **EUROPEAN PATENT SPECIFICATION**

(45) Date of publication and mention
of the grant of the patent:
**16.01.2019 Bulletin 2019/03**

(51) Int Cl.:
***H02M 3/07*** *(2006.01)*

(21) Application number: **15460073.8**

(22) Date of filing: **21.09.2015**

(54) **CIRCUIT AND METHOD FOR CANONICAL AND ADIABATIC DC-DC VOLTAGE CONVERSION**

SCHALTUNG UND VERFAHREN ZUR KANONISCHE UND ADIABATISCHE DC-DC-SPANNUNGSUMWANDLUNG

CIRCUIT ET PROCÉDÉ POUR CONVERSION DE TENSION DC-DC CANONIQUE ET ADIABATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2017 Bulletin 2017/12**

(73) Proprietor: **Politechnika Gdanska 80-233 Gdansk (PL)**

(72) Inventor: **MAKOWSKI, Marek Stanislaw 81-843 Sopot (PL)**

(74) Representative: **Palka, Grazyna JWP Rzercznicy Patentowi Dorota Rzazewska sp.j. Sienna Center ul. Zelazna 28/30 00-833 Warszawa (PL)**

(56) References cited:
**WO-A1-2015/039077**

- **MAKOWSKI MAREK S: "A canonical switched capacitor DC-DC converter", 2014 IEEE 15TH WORKSHOP ON CONTROL AND MODELING FOR POWER ELECTRONICS (COMPEL), IEEE, 22 June 2014 (2014-06-22), pages 1-8, XP032628799, DOI: 10.1109/COMPEL.2014.6877113 [retrieved on 2014-08-12]**
- **LEI YUTIAN ET AL: "Analysis of Switched-capacitor DC-DC Converters in Soft-charging Operation", 2013 IEEE 14TH WORKSHOP ON CONTROL AND MODELING FOR POWER ELECTRONICS (COMPEL), IEEE, 23 June 2013 (2013-06-23), pages 1-7, XP032500811, ISSN: 1093-5142, DOI: 10.1109/COMPEL.2013.6626416 [retrieved on 2013-10-09]**

**Description**

The object of the invention is the circuit for canonical and adiabatic conversion of DC voltage and the method for canonical and adiabatic conversion of DC voltage. The circuit for canonical and adiabatic conversion of DC voltage is used especially as a canonical SC converter of DC voltage, wherein "canonical" indicates the presence of multiple charge transfer modules and a variable conversion gains, with a given/minimum number of components, provided with a function of "soft-charging", or "adiabatic charging", or "soft switching".

SC (Switched Capacitor) converters, also called SC multipliers or charge pumps, belong to a wider group of power supply circuits: switch-mode, high-performance voltage converters (switch-mode transformers), or switch-mode power supplies. Specifically, SC multipliers in the range of low power converted and due to their specific construction are very well suited for integration. Also in the range of higher power (for example embodiments using discrete components), they can be attractive and competitive solutions compared to traditional and more common PWM (Pulse Width Modulated) converters. Thus, for years works have been conducted on effective methods for reducing losses in SC converters, which would allow, while maintaining the attractive features of SC circuits (small size, easy integrating), to extend the range of applications of voltage multipliers to high-performance circuits, with much larger converted power.

Voltage converters with switched capacitors (capacitances) are electronic circuits built with electrical capacitors (C) and periodically switched switches (S). These circuits are used to convert/transform source voltage to various output voltage levels (at load impedance). The model of such a circuit is an ideal transformer with M turns ratio, connected to a series resistance (output resistance representing losses). Voltage turns ratio, also called conversion ratio, or open-circuit voltage gain, takes by nature discrete values, dependant on the structure of the converter and the number of capacitors used. The conversion ratio can be a rational number. Loss resistance represents different power losses in the circuit and is mainly associated with $R_{SSL}$ losses for switching capacitors (within the range of small and medium switching frequencies, Slow Switching limit, SSL) and $R_{FSL}$ losses for conduction, dependent on equivalent, parasitic and series resistances of capacitors and switches. The latter losses are revealed in the range of medium switching frequencies and dominate in the range of high frequencies (Fast Switching Limit, FSL). In FSL mode, losses arise from the use of capacitors, that in fact are non-ideal, and switches with non-zero equivalent series loss resistance (Equivalent Series Resistance, ESR). These losses can be minimised solely by the use of higher quality components.

The document WO 2015069516 A1 discloses an SDT type transformer and its use in AC-AC power converter. The solution enables realisation of soft switching. In some embodiments, the power converter may optionally comprise an LSC circuit (Level Selection Circuit) on one or both sides of the distribution circuit and the connecting circuit. The circuit comprises a multiple winding transformer, i.e. constructed with inductors, described as AC link, which cooperates on primary and secondary clamps with SC circuits.

The document PCT/US2014/055796 (WO/2015/039077) discloses a charge pump apparatus comprising capacitors and set of switches. A controller is coupled to the charge pomp and gets information from sensors. The controller is adjusting a timing pattern of a switching signal for obtaining a desired voltage. The driving signal from the controller is similar to a PWM and a driving signal frequency may also change in time.

The document US 2015188405 A1 discloses an SC converter, which, using a resonant circuit, ensures soft switching over the operating range. In this resonant circuit adiabatic operating conditions are achieved by a complex system controlling the operation of multiple switches, to achieve "soft" switching, in a wide range. Described solution comprises one flying capacitor, and the operational range (voltage gains) is within the range of (0.5-2). The converter in operation is similar to PWM converter, with continuous gain control.

In the patent US 8817501 B1 (inventors: A. Low, D.M. Giuliano, G. Szczeszynski, J. Summit and O. Blyde) it is discussed, inter alia, the use of soft (adiabatic) charging of capacitors using current sources (or inductors). The number of sources used is equal to the number of flying (or floating) capacitors and as such is a redundant number. The document discloses a circuit design of converter, wherein gains are integer numbers only. There is no possibility of synthesising fractional gains and thus it is not a canonical converter.

The patent US 8212541 B2 (inventors: D.J. Perreault, R.C.N. Pilawa-Podgurski and D.M. Giuliano) discloses a circuit built with a cascade connection of two converters so that the SC converter is loaded (charged) with the latter PWM type (e.g. buck type) converter. The input of the latter converter operates in current source mode. The circuit allows operation with soft charging capacitors. The circuit implements a certain set of voltage conversion ratios (for 2 flying capacitors), but there is not presented any systematic method for achieving a circuit with multiple gains, and it is not clear whether and how to implement different gains for a larger number of capacitors. Thus the circuit is not a canonical circuit.

The issue of implementation of a certain set of voltage conversion ratios was included in the paper by M.S. Makowski and D. Maksimovic, "Performance limits of switched-capacitor DC-DC converters", in Power Electronics Specialists Conference, 1995. PESC '95 Record., 26th Annual IEEE, vol. 2. IEEE, Jun. 1995, pp. 1215-1221 Vol.2.

According to the papers by S. Nakata, M. Miyama, and Y. Matsuda, "Adiabatic charging and discharging method with minimum energy dissipation for a variable-gap capacitor system," IET Circuits, Devices & Systems, vol. 4, no. 4, pp. 301+, 2010, adiabatic charging/discharging (of parasitic capacitances) previously being used in adiabatic logic circuit design, followed by a number of power electronics applications (with capacitors as energy transferring components). Adiabatic mode can be realised for instance by gradual stair-like charging, or sinusoidal charging with the use of a collection of inductors and/or a single inductor.

Further "adiabatic-related" publications are:

- [1] V. G. Oklobdzija, D. Maksimovic, and F. Lin, "Pass-transistor adiabatic logic using single power-clock supply," IEEE Transactions on Circuits and Systems II: Analog and Digital Signal Processing, vol. 44, no. 10, pp. 842-846, Oct. 1997;
- S. Paul, A. M. Schlaffer, and J. A. Nossek, "Optimal charging of capacitors," IEEE Transactions on Circuits and Systems I: Fundamental Theory and Applications, vol. 47, no. 7, pp. 1009-1016, Jul. 2000;
- D. Chernichenko, A. Kushnerov, and S. Ben-Yaakov, "Adiabatic charging of capacitors by switched capacitor converters with multiple target voltages," in 2012 IEEE 27th Convention of Electrical and Electronics Engineers in Israel. IEEE, Nov. 2012, pp. 1-4.

In the papers by Y. Lei and R. C. N. Pilawa-Podgurski, "Analysis of switched-capacitor DC-DC converters in soft-charging operation", in Control and Modeling for Power Electronics (COMPEL), 2013 IEEE 14th Workshop on IEEE Jun. 2013, pp. 1-7; and by Y. Lei and R. C. Pilawa-Podgurski, "A general method for analyzing resonant and Soft-Charging operation of Switched-Capacitor converters", Power Electronics, IEEE Transactions on, vol. 30, no. 10, pp. 5650-5664, October 2015, there was overviewed the SC topology and SP and Fib converters were indicated as suitable for soft-charging, or adiabatic, operation with the use of a single inductor. However, the circuits used (for adiabatic purposes) in research were not multi-terminal systems and consequently allowed no control of weights responsible for gains. A distribution of capacitance values of flying capacitors for different topologies, including SP and Fib, that is required for operation with soft charging, was determined. Only step-down converters known from the literature were tested, giving minimal gains; circuits with other gains, including neither maximum, nor intermediate and fractional gains were not tested, i.e. all attainable gains attributed to canonical circuits were not tested. In addition, the above papers do not indicate whether the adiabatic effect for a converter with any gain can be achieved and, if it is possible, where in the circuit an L inductor should be placed. In the tested step-down circuits an inductor was placed at the converter output $V_{out}$, in series with a load.

The application P.408614 and the paper by M.S. Makowski, "A canonical switched capacitor DC-DC converter", in Control and Modeling for Power Electronics (Compel), 2014 15th IEEE Workshop on IEEE Jun. 2014, pp. 1-8, disclose a systematic method for canonical conversion of DC voltage and a circuit for canonical conversion of DC voltage, which applies particularly as canonical converter of DC voltage. In an embodiment, there is constructed a canonical circuit of n transfer modules, each of which is constructed of a single electrical capacitor and three electronic switches, and a final module comprising a single electronic switch. In this canonical circuit, transfer modules are connected to each other in a series -parallel or a cascaded way (or manner), then the set of all equivalent terminals extracted from the circuit is connected to a Single-Pole Triple-Throw switch (SPTT) each, comprising n+2 switches. During conversion, control is made by means of electronic switches, using a rectangular clock signal. Terminals are assigned with numerical weights and on their basis switching of terminals is conducted.

From the prior art there is known a number of solutions for SC converters operating in the resonance mode and/or with the so-called "soft switching". Known solutions often require substantial expansion of a circuit and/or a complicated control over the operation of switches, which leads to a partial "masking", beneficial when the effect of reducing losses in the circuit is intended.

A good converter is one, that allows for implementation of different, possibly all, conversion ratios at the set and possibly small number of capacitors, and has a low output resistance.

Feasibility of the postulate concerning minimising the output resistance in traditional SCC converters in SSL operating mode is limited by the value of capacitance of flying capacitors C, carrying charge and energy between input and output of a circuit, depend on circuit configuration and are limited by the value of switching frequency according to the formula $R_{SSL} \sim \frac{1}{f_S C}$, where $f_S$ is the switching frequency.

$R_{SSL}$ losses can be controlled/minimised by choosing capacitors with sufficiently large electric capacitance and/or properly selecting sufficiently high switching frequency.

Solutions using capacitors of large capacity and/or very high switching frequency - in many applications, particularly in version integrated at semiconductor - are not practical, due to large geometric sizes (e.g. capacitors) or degrading effect of parasitic components, e.g. parasitic stray capacitances, increasing with increasing switching frequency.

The object of the invention is a circuit for canonical and adiabatic conversion of DC voltage, as fully specified by claim 1, comprising a canonical circuit with n transfer modules, each of which is constructed of a single electrical capacitor and three electronic switches, and a final module comprising a single electronic switch, wherein from the canonical circuit there being extracted equivalent terminals $tt = \{t_0, t_1,...,t_{n+1}\}$ connected to the output, the input and ground, each of these equivalent terminals $tt = \{t_0, t_1,...,t_{n+1}\}$ being connected to a respective switch of the $n+2$ switches contained in the Single-Pole Triple-Throw switch, wherein the electronic switches are controlled with an electronic clock, and to the terminal switch there is connected a capacitor constituting the output of the circuit, which is characterised in that to the external terminal, preserving the continuity of current flow, there is connected an inductor, and electrical capacitors have identical electric capacitances.

Preferably, the transfer modules are connected to each other in a series-parallel way.

Preferably, the transfer modules are connected to each other in a cascaded way. The value of the clock duty ratio depends on the number of transfer modules and topology of the canonical circuit.

Preferably, in parallel to the inductor there is connected an additional switch, which removes the inductor from the circuit.

The object of the invention is also a method for canonical and adiabatic conversion of DC voltage, as fully specified by claim 5, consisting in voltage regulation by the canonical circuit comprising n transfer modules, each of which is constructed of a single electrical capacitor and three electronic switches, and a final module comprising a single electronic switch, wherein from the canonical circuit there being extracted equivalent terminals $tt = \{t_0, t_1,...,t_{n+1}\}$ connected to the output, the input and ground, each of these equivalent terminals $tt = \{t_0, t_1,...,t_{n+1}\}$ being connected to the respective switch of the $n+2$ switches contained in the Single-Pole Triple-Throw switch, wherein the electronic switches are controlled with an electronic clock, and the capacitor constituting the output of the circuit is connected to the terminal switch, and during conversion a rectangular clock signal is controlled with electronic switches, and all terminals from the set $tt = \{t_0, t_1,..., t_{n+1}\}$ are assigned with numerical weights constituting the set $ww = (w(t_0), w(t_1),...,w(t_{n+1}))$, a and the switching of terminals $\{t_0, t_1,...,t_{n+1}\}$ contained in between the input and the output and ground in the terminal switch, is carried out in accordance with the set weights that meet the topological condition: $w(t_0) + \sum_{i=1}^{k} w(t_i) = 0$ and the normalisation condition: $\frac{M_{max}}{w(t_0)} = 1$, wherein each realizable voltage conversion ratio $M = \frac{V_{out}}{V_{in}}$ is implemented according to the formula:

$$M = \frac{P}{Q} = -\frac{\sum_{t_i \in ttn} w(t_i)}{\sum_{t_j \in ttd} w(t_j)} \cdot$$

where:

P - sum of weights in the numerator
Q - sum of weights in the denominator, and

$$\frac{P}{Q} = \frac{V_{out}}{V_{in}}$$

and $ttn$ and $ttd$ are two disjoint subsets of the set $tt$, the intersection of which is an empty set, the subset $ttn$ is the subset of the terminals connected to the input, and the subset $ttd$ is the subset of the terminals connected to the output, characterised in that to the external terminal, preserving the continuity of current flow, there is connected an inductor, and capacitances of capacitors are chosen in such way that they are identical.

Preferably, transfer modules are connected to each other in a series-parallel way.

Preferably, transfer modules are connected to each other in a cascaded way. The clock duty ratio is set to the value dependant on the number of transfer modules and topology of the canonical circuit.

Preferably, an additional switch is connected in parallel to the inductor.

The most important advantages of the solution according to the invention include:

-    the converter implements all voltage gains, achievable for a given number of capacitors, thus this is a canonical converter;

- the converter is minimal, which means that voltage gains are achieved with a minimum number of circuit components (capacitors, including electronic switches);
- a wide range of input voltage, at which a high energy efficiency is achieved, for example, at load current of 150mA, the object of the invention gives a score of 5, i.e. 5/1.83≈2.7 times greater than the result of the integrated voltage stabiliser LM2772; a typical value for increasing the voltage range is about 3, $\frac{V_{in_{max}}}{V_{in_{min}}} = \frac{35}{7} = 5$;
- the circuit can be easily programmed to achieve any gain (discrete/step programming of the output voltage at the maximum theoretically achievable precision);
- a minimum number of components with a small size of a circuit enables miniaturisation and integration, saving materials and costs;
- soft switching, reduction/minimisation of power losses and the emitted electromagnetic interference are achieved with the use of a minimum number of additional components with respect to a circuit with "hard switching", i.e. with respect to a classical SC converter;
- thanks to assigning numerical weights to terminals the user can in a simple, intuitive and immediate way figure out the settings of programming switches to achieve the desired voltage gain (the rule of thumb).

The solution according to the invention also allows for a full range of changes in the voltage conversion ratio and a minimum loss resistance through soft charging.

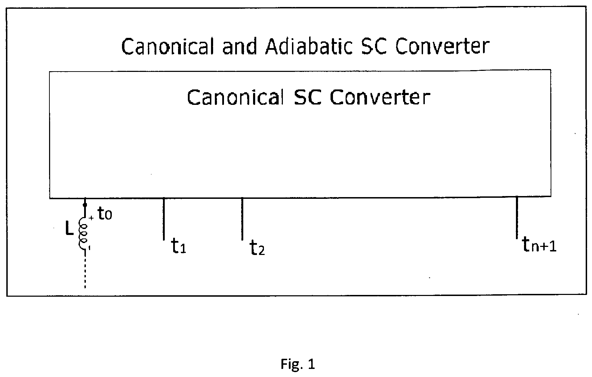

The object of the invention is illustrated in the embodiments in the drawing, in which Fig. 1 shows structurally the circuit according to the invention, Fig. 2 - a diagram of the circuit in the embodiment implementing cascaded connections of transfer modules, Fig.3 - a diagram of the circuit in the embodiment implementing series-parallel connections of transfer modules, Figs. 4 and 5 - a Fibonacci's SC converter provided with the function of soft charging of the capacitors, Figs. 6 and 7 - a series -parallel SC converter provided with the function of soft charging of the capacitors, Fig. 8 - the converter in a general embodiment, Fig. 9 - an inductor shunted by a Single-Pole Single-Throw (SPST) switch to select the operating mode of the converter, i.e. the open switch - operation in adiabatic mode, closed switch - operation in non-adiabatic mode.

The object of the invention is illustrated by the following embodiments, that show the circuit for canonical and adiabatic conversion of DC voltage in two configurations, as the Fibonacci's canonical adiabatic converter Fib and as the series-parallel adiabatic converter SP.

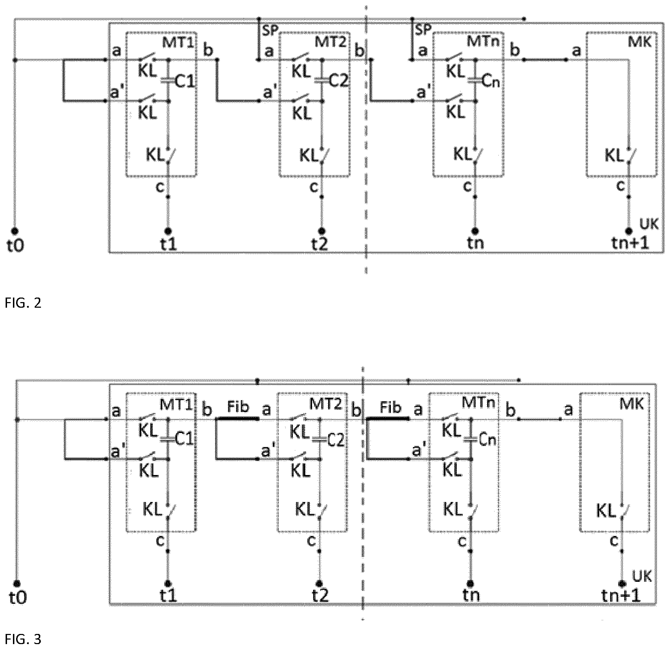

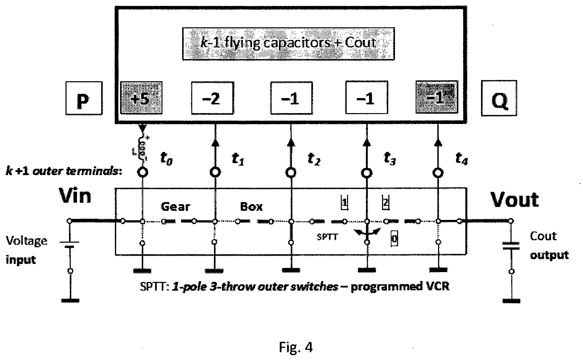

As shown in Figs. 2 and 4, the circuit for canonical and adiabatic conversion of DC voltage comprises a canonical circuit UK with n transfer modules *MT1, MT2, MT3* connected to each other in a cascaded way Fib, each of which is constructed of a single electric capacitor C1, C2, C3, and three electronic switches KL. The canonical circuit UK also comprises a final module MK with a single electronic switch KL. From the canonical circuit UK there are extracted equivalent terminals tt={$t_0$ - $t_4$} having the ability to connect to the output, input and ground, wherein each of these 5 equivalent terminals tt={$t_0$ - $t_4$} is connected to a respective switch of the 5 switches contained in the Single-Pole Triple-Throw switch SPTT, accompanied by the capacitor constituting the output of the circuit $C_{out}$. In addition, to the external terminal $t_0$, preserving the continuity of current flow, there is connected an inductor L. For achieving the operation in adiabatic mode the capacitance of the electrical capacitors C is identical, while in non-adiabatic mode the capacitances of electrical capacitors C can be varied, for example, to minimise the output resistance $R_{SSL}$.

In the embodiment according to the invention, during conversion, the rectangular clock signal is controlled with electronic switches KL. All terminals of the set tt={$t_0$ - $t_4$} are assigned with numerical weights constituting the set *ww* = {$w(t_0)$ - $w(t_4)$,...} and the switching of terminals tt={$t_0$ - $t_4$} contained in between the input $V_{in}$ and the output $V_{out}$ and ground in the terminal switch is carried out in accordance with the set weights that meet

the topological condition: $w(t_0) + \sum_{i=1}^{k} w(t_i) = 0$ and the normalisation condition: $\frac{M_{max}}{w(t_0)} = 1$. Each realizable voltage conversion ratio $M = \frac{V_{out}}{V_{in}}$ is implemented according to the formula:

$$M = \frac{P}{Q} = -\frac{\sum_{t_i \in IIn} w(t_i)}{\sum_{t_j \in IId} w(t_j)}.$$

where:

P - sum of weights in the numerator

Q - sum of weights in the denominator, and $\dfrac{P}{Q} = \dfrac{V_{out}}{V_{in}}$.

In this embodiment (Fig. 4):

$$M = \frac{P}{Q} = -\frac{w(t_1)}{w(t_0)} = \frac{2}{5} \text{ and } M = \frac{P}{Q} = -\frac{w(t_0)}{w(t_2)} = \frac{5}{1}.$$

The designations *ttn* and *ttd* used in the above formula are two disjoint subsets of the set *tt* meeting the condition: *ttn* ∩ *ttd* = Ø, i.e. the intersection of which is an empty set, and the subset *ttn* is the subset of the terminals connected to the input $V_{in}$, and the subset *ttd* is the subset of the terminals connected to the output $V_{out}$. To achieve operation in adiabatic mode, the external terminal to preserving the continuity of the current flow, is equipped with the inductor L with a low inductance value, wherein the value is not critical, i.e. very weakly depend or do not depend at all on switching frequency, capacitance value, the range of converted voltage and power, etc. The condition of continuity of the current flow through the inductor L remains to be met regardless of the set, by external switches SPTT in the Gear Box programming block, value of the conversion ratio $M = \dfrac{V_{out}}{V_{in}}$ . In addition, the capacitors C1, C2, C3 are selected such that they are identical and the clock duty ratio is set to the value dependant on the number of transfer modules MT and topology of the canonical circuit UK. In other words, this ratio should be numerically equal to the quotient of the respective terminal weights, e.g. $1 - \dfrac{w(t_1)}{w(t_0)}$.

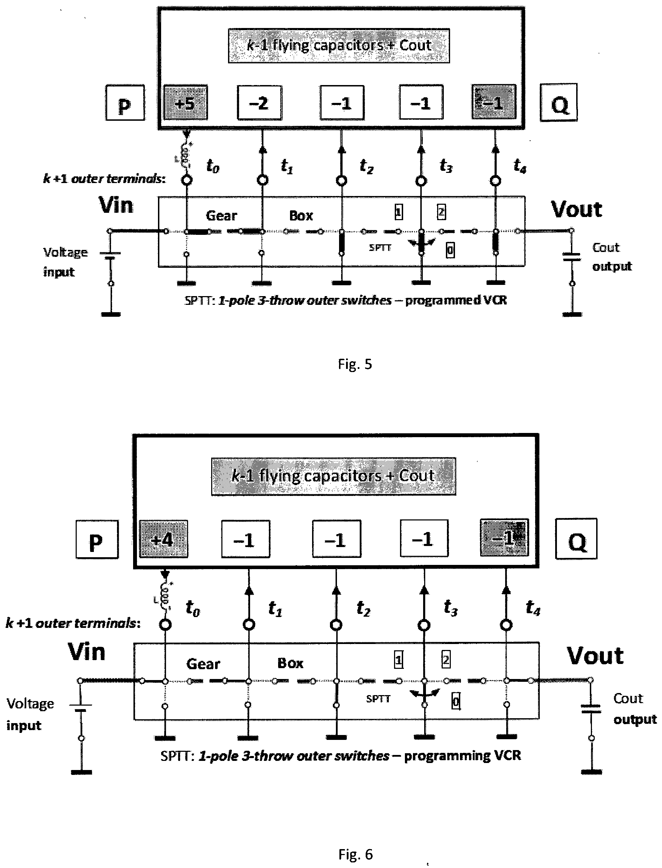

In another embodiment for the Fibonacci topology, shown in Fig. 5, such connections of programming switches (in the Gear Box block, highlighted in SPTT with bold black lines) are shown, where the terminal {$t_1$} is connected to $V_{in}$, the terminal {$t_0$} is connected to $V_{out}$, other terminals {$t_2, t_3, t_4$} are connected to ground. With these settings voltage gain amounts to $M = 2/5$, $M = \dfrac{P}{Q} = -\dfrac{w(t_1)}{w(t_0)} = \dfrac{2}{5}$ The inductor L ensures soft charging of the capacitors (adiabatic operation).

The illustrated topology Fib enables implementation of the fractional (and with the alternative settings of the programming switches) gains and enables easier modelling of the circuit and/or optimisation with regard to other parameters such as parasitic parameters related to the technology of implementation.

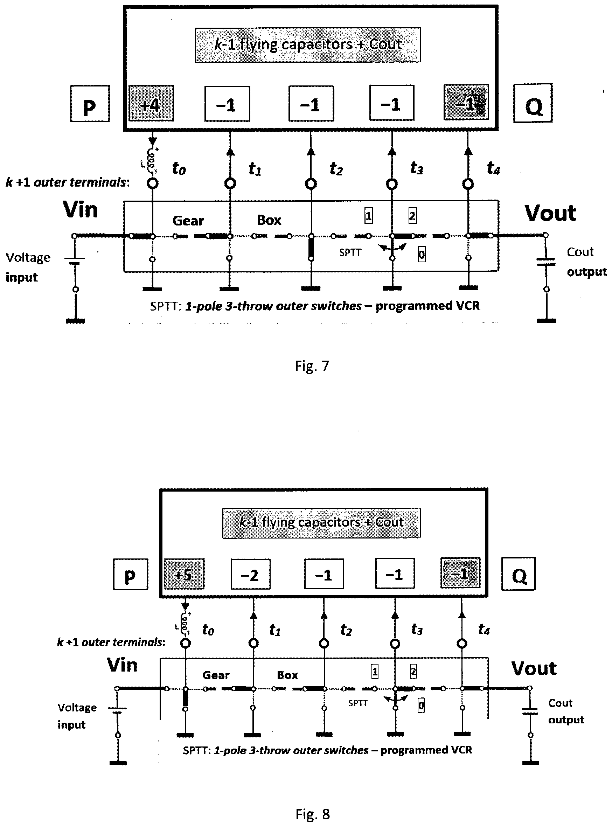

Other embodiments (Fig. 6 and 7) differ from the above in that the transfer modules MT1, MT2, MT3 of the canonical circuit UK are connected to each other in series -parallel way SP. Then, in the embodiment of Fig. 6.:

$$M = \frac{P}{Q} = -\frac{w(t_0) + w(t_1)}{w(t_4)} = -\frac{4-1}{1} = \frac{3}{1}$$

However, in the embodiment shown in Fig. 7, where the terminals {$t_0, t_1$} are connected to $V_{in}$, the terminals {$t_3, t_4$} are connected to $V_{out}$, and the terminal {$t_2$} is connected to ground. With these settings voltage gain amounts to

$$M = 3/2, \; M = \frac{P}{Q} = -\frac{w(t_0) + w(t_1)}{w(t_2) + w(t_4)} = -\frac{4-1}{1+1} = \frac{3}{2} \text{, and the inductor L ensures soft charging of the capacitors}$$

(adiabatic operation).

The topology SP shown in the above embodiments enables implementation of the fractional (and with the alternative settings of the programming switches) gains and enables easier modelling of the circuit and/or optimisation with regard to other parameters such as parasitic parameters related to the technology of implementation.

In the general embodiment shown in Fig. 8, the inductor L is not activated neither in series with load nor at the output or at the input of the circuit.

Then:

$$M = \frac{P}{Q} = -\frac{w(t_1) + w(t_2)}{w(t_3) + w(t_4)} = -\frac{-2-1}{-1-1} = -\frac{3}{2}$$

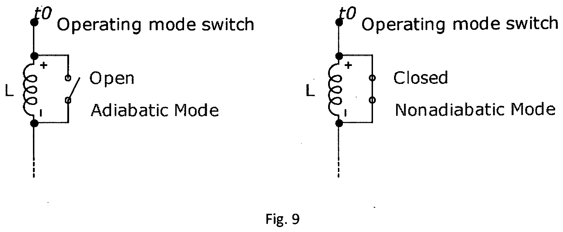

In another embodiment, in both topologies Fib, SP, there is possible the alternative (optional) operation in both non-adiabatic and adiabatic modes. Then the switching to non-adiabatic mode of operation consists in the replacement of the inductor L with a short-circuit, which technically can be implemented by connecting, in parallel to the inductor L, an additional switch, such as a switch operated manually or automatically, Fig. 9. In some applications non-adiabatic mode of operation may be preferred, e.g. in the integrated version and for conversion of low powers, because the inductor is in contrary to capacitors not well suited to integrating in semiconductor technology, then the inductor is implemented as an external discrete component.

There are possible embodiments with mixed (hybrid) connecting, i.e. combined connection of modules, for example, selected two modules (e.g. modules with the terminals $t_1$ and $t_2$) are connected in series-parallel way (as in the primary converter SP) and the rest of the modules in cascaded way (as in the "pure", or primary example Fib). In such embodiments, formulas for $M$ (voltage gain, or the voltage conversion ratio $M = \dfrac{P}{Q}$ remain always in force and only the weights w assigned to the terminals of the circuit are modified.

The measurement results for all the gains in the illustrated embodiments have been confirmed by computer simulations (in the simulation program Pspice-MicroCap). In particular, it was confirmed that in the adiabatic mode, the output resistance decreases to the level $R_{FSL}$ for all set gains and respectively chosen duty ratios $D$ of the switching course.

Summarising, switching into the adiabatic charging mode in the canonical SC converter requires meeting the following additional conditions in regard to change in the structure of the circuit, values of components and way of controlling the switches:

1. connecting of the inductor L to the external terminal $t_0$,
2. selection of capacitance values of the capacitors (k - 1 flying capacitors of Figs. 4 and 5), so that $C_1 = C_2 = C_3 = ... = C_{k-1} = C$;
3. setting the clock duty ratio to the value dependant on the number of transfer modules MT and the topology (Fib or SP); in the case of k - 1 = 3, as in Fig. 3, this factor is to be: D = 0.6.

The conditions described are not dependent on the set conversion ratio in a given structure/topology.

In the canonical and non-adiabatic SC converter, the capacitance values $C_1$, $C_2$, $C_3$ ... $C_{k-1}$ have no effect on the conversion function $M = \dfrac{V_{out}}{V_{in}}$. These values are chosen dependant on the switching frequency, to achieve an adequate level of output resistance of the circuit. In such optimisation (minimisation) of the resistance is possible only to a certain extent.

In the canonical and adiabatic SC converter the capacitance values $C_1$, $C_2$, $C_3$ ... $C_{k-1}$ also have no effect on the conversion function $M = \dfrac{V_{out}}{V_{in}}$. These values (specifically the ratio of the values $\dfrac{C_i}{C_j} = 1$, for each pair of numbers $1 \le i, j \le k - 1$) are critical and are to be equal, to switch into the adiabatic mode. In this mode, the component $R_{SSL}$ of output resistance disappears.

The clock signal, used in the embodiments, has a square course with the period of repetition $T_s = \dfrac{1}{f_s}$, where $f_s$ is the clock frequency. The clock duty ratio D is defined as a ratio of time to close (or set on) the switch to the repetition period: $D = \dfrac{T_{on}}{T_s} \rightarrow T_{on} = DT_s$. The numerical value of the duty ratio $D$ is in the range of 0 < $D$ < 1. Value $D$ is critical, it requires the setting for switching into the mode of operation with "soft" charging.

The clock controls (periodic) operation of only those switches KL, which can be seen in Figs. 2 and 3. Other switches (SPTT, in Figs. 4 and 5, see Gear Box) are adjustable switches, set manually or automatically dependant on M and/or operating mode.

The indicated embodiments are given here only as non-limiting examples and in any way cannot limit the scope of protection, which is defined by the claims.

**Claims**

1. A circuit for canonical and adiabatic, i.e. soft-charging, conversion of DC voltage, comprising a switched capacitor (SC) circuit with n transfer modules (MT) and a variable conversion gain, hereinafter called an SC canonical circuit, each transfer module (MT) being constructed of a single electrical capacitor and three electronic switches, and a final module, comprising a single electronic switch, wherein from the SC canonical circuit there being extracted equivalent terminals $tt = \{t_0, t_1,..., t_{n+1}\}$, where terminals $tt = \{t_0, t_1,..., t_{n+1}\}$ are connected to either the input $V_{in}$, the output $V_{out}$ or the ground of the circuit for canonical and adiabatic conversion of DC voltage through a corresponding Single-Pole Triple-Throw switch of the $n+2$ switches contained in a Single-Pole Triple-Throw switch Gear box, wherein the electronic switches are controlled with an electronic clock, and the output of the circuit for canonical and adiabatic conversion of DC voltage is connected, through a capacitor $C_{out}$, to the ground, **characterised in that** an inductor (L) preserving the continuity of current flow is connected to the outer terminal ($t_0$) of the SC canonical circuit and the first Single-Pole Triple-Throw switch of the Single-Pole Triple-Throw switch Gear box, **and in that** the electrical capacitors (C) of the SC canonical circuit have identical electric capacitances, **and in that** the value of the clock duty ratio depends on the number of transfer modules (MT) and topology of the canonical circuit (UK).

2. The circuit according to claim 1, **characterised in that** the transfer modules ($MT_1$, $MT_2$, ... $MT_n$) are connected to each other in a series -parallel way (SP).

3. The circuit according to claim 1, **characterised in that** the transfer modules ($MT_1$, $MT_2$, ... $MT_n$) are connected to each other in a cascaded way (Fib).

4. The circuit according to any of the preceding claims, **characterised in that** in parallel to the inductor (L) there is connected an additional switch, which removes the inductor (L) from the circuit.

5. A method for canonical and adiabatic conversion of DC voltage, using the circuit of either one of claims 1 to 4, wherein during conversion electronic switches are controlled with a rectangular clock signal, and all terminals from the set $tt = \{t_0,t_1,...,t_{n+1}\}$ are assigned with numerical weights constituting the set $ww = \{w(t_0),w(t_1),...,w(t_{n+1})\}$, and the switching of terminals $\{t_0,t_1,...,t_{n+1}\}$, contained in between the input and the output and ground in the Single-Pole Triple-Throw switch Gear box is carried out in accordance with the set weights that meet the topological condition:

$$w(t_0)+\sum_{i=1}^{k} w(t_i)=0$$ and the normalisation condition: $\dfrac{M_{max}}{w(t_0)} = 1$, wherein each realizable voltage conversion ratio

$M = \dfrac{V_{out}}{V_{in}}$ is implemented according to the formula:

$$M = \frac{P}{Q} = -\frac{\sum\limits_{t_i \in ttn} w(t_i)}{\sum\limits_{t_j \in ttd} w(t_j)},$$

where:

P - sum of weights in the numerator
Q - sum of weights in the denominator, and

$$\frac{P}{Q} = \frac{V_{out}}{V_{in}}$$

and *ttn* and *ttd* are two disjoint subsets of the set *tt,* the intersection of which is an empty set, the subset *ttn* is the subset of the terminals connected to the input, and the subset *ttd* is the subset of the terminals connected to the output.

**Patentansprüche**

1. Schaltung für eine kanonische und adiabatische, d.h. Soft-Charging-, Umwandlung von DC-Spannung, umfassend eine Schaltung des geschalteten Kondensators (SC) mit n Transfermodulen (MT) und eine variable Verstärkung der Umwandlung, im Folgenden als SC-kanonische Schaltung bezeichnet, wobei jeder Transfermodul (MT) aus einem einzelnen elektrischen Kondensator und drei elektronischen Schaltern und einem einen einzelnen elektronischen Schalter umfassenden Endmodul aufgebaut ist, wobei aus der SC-kanonischen Schaltung äquivalente

Anschlusspunkte $tt = \{t_0, t_1,...,t_{n+1}\}$ herausgezogen werden, wobei Anschlusspunkte $tt = \{t_0, t_1,..., t_{n+1}\}$ entweder zu dem Eingang $V_{in}$, dem Ausgang $V_{out}$ oder der Erdung der Schaltung für eine kanonische und adiabatische Umwandlung von DC-Spannung über einen entsprechenden einpoligen dreifach umlegenden Schalter der $n+2$ Schalter geschaltet sind, die in einem Schaltgetriebe der einpoligen dreifach umlegenden Schalter enthalten sind, wobei die elektronischen Schalter mit einer elektronischen Uhr gesteuert sind, und der Ausgang der Schaltung für eine kanonische und adiabatische Umwandlung von DC-Spannung zur Erdung über einen Kondensator $C_{out}$ geschaltet ist, **dadurch gekennzeichnet, dass** ein die Kontinuität des Stromflusses erhaltender Induktor (L) zu dem äußeren Anschlusspunkt (to) der SC-kanonischen Schaltung und dem ersten einpoligen dreifach umlegenden Schalter des Schaltgetriebes der einpoligen dreifach umlegenden Schalter geschaltet ist, **und dass** die elektronischen Kondensatoren (C) der SC-kanonischen Schaltung identische elektrische Kapazitanzen aufweisen, **und dass** der Wert von Uhrengradverhältnis von der Anzahl der Transfermodulen (MT) und der Topologie der kanonischen Schaltung (UK) abhängt.

2. Schaltung nach Anspruch 1, **dadurch gekennzeichnet, dass** die Transfermodulen ($MT_1$, $MT_2$, ... $MT_n$) seriell-parallel (SP) miteinander geschaltet sind.

3. Schaltung nach Anspruch 1, **dadurch gekennzeichnet, dass** die Transfermodulen ($MT_1$, $MT_2$, ... $MT_n$) in Kaskaden (Fib) miteinander geschaltet sind.

4. Schaltung nach einer der vorstehenden Ansprüche, **dadurch gekennzeichnet, dass** ein zusätzlicher, den Induktor (L) aus der Schaltung entfernender Schalter parallel zu dem Induktor (L) geschaltet ist.

5. Ein Verfahren für eine kanonische und adiabatische Umwandlung von DC-Spannung, unter Verwendung von der Schaltung nach einem der Ansprüche 1 bis 4, wobei elektronische Schalter während der Umwandlung mit einem rechteckigen Uhrsignal gesteuert sind, und allen Anschlusspunkten von der Menge $tt = \{t_0, t_1,..., t_{n+1}\}$ numerische Gewichte, die die Menge $ww = (w(t_0), w(t_1),...,w(t_{n+1})\}$ bilden, zugeordnet sind, und die Umschaltung der Anschlusspunkte $\{t_0, t_1...,t_{n+1}\}$, die zwischen dem Eingang und dem Ausgang und der Erdung in dem Schaltgetriebe der einpoligen dreifach umlegenden Schalter enthalten sind, entsprechend den Mengengewichten, die die topologische Bedingung:

$$ w(t_0) + \sum_{i=1}^{k} w(t_i) = 0 $$

und die Normalisierungsbedingung: $\frac{M_{max}}{w(t_0)} = 1$ erfüllen, ausgeführt wird, wobei jede realisierbare Spannungsumwandlungsverhältnis $M = \frac{V_{out}}{V_{in}}$ nach der Formel: $M = \frac{P}{Q} = -\frac{\sum_{t_i \in ttn} w(t_i)}{\sum_{t_j \in ttd} w(t_j)}$ ausgeführt wird, wobei:

P - Gewichtssumme in dem Zähler
Q - Gewichtssumme in dem Nenner, und

$$ \frac{P}{Q} = \frac{V_{out}}{V_{in}} $$

$ttn$ und $ttd$ zwei getrennte Teilmengen der Menge $tt$ sind, deren Schnittpunkt eine leere Menge ist, die Teilmenge $ttn$ die Teilmenge von den zum Eingang geschalteten Anschlusspunkten ist, und die Teilmenge $ttd$ die Teilmenge von den zum Ausgang geschalteten Anschlusspunkte ist.

## Revendications

1. Un circuit pour la conversion canonique et adiabatique, c'est-à-dire une charge douce, de tension continue, comprenant un circuit à capacités commutées (SC) avec n modules de transfert (MT) et un gain de conversion variable, ci-après dénommé un circuit canonique SC, chaque module de transfert (MT) étant constitué d'un seul condensateur électrique et de trois interrupteurs électroniques, et un module final, comprenant un seul interrupteur électronique, où à partir du circuit canonique SC, les terminaux équivalents étant extraits $tt = \{t_0, t_1, ..., t_{n+1}\}$, où les terminaux $tt = \{t_0, t_1, ..., t_{n+1}\}$ sont connectés à l'entrée $V_{in}$, à la sortie $V_{out}$ ou à la masse du circuit pour la conversion canonique et adiabatique de la tension continue via un interrupteur tridirectionnel unipolaire correspondant des n+2 interrupteurs contenus dans une boîte de vitesses à interrupteur tridirectionnel unipolaire, dans lequel les interrupteurs électroniques sont contrôlés par une horloge électronique, et la sortie du circuit pour la conversion canonique et adiabatique de la tension continue est connectée, à travers un condensateur $C_{out}$, à la terre, à la masse, **caractérisé en ce qu'**un inducteur (L) préservant la continuité du flux de courant est connecté au terminal extérieur (to) du circuit canonique SC et l'interrupteur tridirectionnel unipolaire de la boîte de vitesses à interrupteur tridirectionnel unipolaire, **en ce que** les condensateurs électriques (C) du circuit canonique SC ont des capacités électriques identiques, **et en ce que** la valeur du cycle de service d'horloge dépend du nombre de modules de transfert (MT) et de la topologie du circuit canonique (UK).

2. Le circuit selon la revendication 1, **caractérisé en ce que** les modules de transfert ($MT_1$, $MT_2$, ... $MT_n$) sont connectés les uns aux autres en série de manière parallèle (SP).

3. Le circuit selon la revendication 1, **caractérisé en ce que** les modules de transfert ($MT_1$, $MT_2$, ... $MT_n$) sont connectés les uns aux autres en cascade (Fib).

4. Le circuit selon l'une quelconque des revendications précédentes, **caractérisé en ce qu'**en parallèle à l'inducteur (L) un interrupteur supplémentaire est connecté qui élimine l'inducteur (L) du circuit.

5. Une procédé pour la conversion canonique et adiabatique de tension continue, utilisant le circuit de l'une quelconque des revendications 1 à 4, dans laquelle pendant la conversion, les interrupteurs électroniques sont contrôlés par un signal d'horloge rectangulaire, et toutes les terminaux de l'ensemble $tt = \{t_0, t_1, ..., t_{n+1}\}$ sont assignés avec des poids numériques constituant l'ensemble ww = $\{w(t_0), w(t_1), ..., w(t_{n+1})\}$, et la commutation des terminaux $\{t_0, t_1, ..., t_{n+1}\}$, contenus entre l'entrée et la sortie et la masse dans la boîte de vitesses à interrupteur tridirectionnel unipolaire est effectuée conformément aux poids définis qui répondent à

la condition topologique : $w(t_0) + \sum\limits_{i=1}^{k} w(t_i) = 0$ et la condition de normalisation : $\frac{M_{max}}{w(t_0)} = 1$, dans laquelle chaque rapport de conversion de tension réalisable $M = \frac{V_{out}}{V_{in}}$ est mis en oeuvre selon la formule :

$$M = \frac{P}{Q} = -\frac{\sum\limits_{t_i \in ttn} w(t_i)}{\sum\limits_{t_j \in ttd} w(t_j)},$$

où :

    P - somme des poids dans le numérateur
    Q - somme des poids dans le dénominateur, et

$$\frac{P}{Q} = \frac{V_{out}}{V_{in}}$$

et $ttn$ et $ttd$ sont deux sous-ensembles disjoints de l'ensemble $tt$, dont l'intersection est un ensemble vide, le sous-ensemble $ttn$ est le sous-ensemble des terminaux connectés à l'entrée, et le sous-ensemble $ttd$ est le sous-ensemble des terminaux connectés à la sortie.

Canonical and Adiabatic SC Converter

Canonical SC Converter

L

$t_0$

$t_1$

$t_2$

$t_{n+1}$

Fig. 1

FIG. 2

FIG. 3

Fig. 4

Fig. 5

Fig. 6

Fig. 7

Fig. 8

*t0* Operating mode switch

L

+

I

Open

Adiabatic Mode

*t0* Operating mode switch

L

+

I

Closed

Nonadiabatic Mode

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015069516 A1
- US 2014055796 W
- WO 2015039077 A
- US 2015188405 A1
- US 8817501 B1, A. Low, D.M. Giuliano, G. Szczeszynski, J. Summit and O. Blyde
- US 8212541 B2, D.J. Perreault, R.C.N. Pilawa-Podgurski and D.M. Giuliano

### Non-patent literature cited in the description

- Performance limits of switched-capacitor DC-DC converters. **M.S. MAKOWSKI ; D. MAKSIMOVIC.** Power Electronics Specialists Conference, 1995. PESC '95 Record., 26th Annual IEEE, vol. 2. IEEE, vol. 2, 1215-1221
- **S. NAKATA ; M. MIYAMA ; Y. MATSUDA.** Adiabatic charging and discharging method with minimum energy dissipation for a variable-gap capacitor system. *IET Circuits, Devices & Systems,* 2010, vol. 4 (4), 301
- **V. G. OKLOBDZIJA ; D. MAKSIMOVIC ; F. LIN.** Pass-transistor adiabatic logic using single power-clock supply. *IEEE Transactions on Circuits and Systems II: Analog and Digital Signal Processing,* October 1997, vol. 44 (10), 842-846
- **S. PAUL ; A. M. SCHLAFFER ; J. A. NOSSEK.** Optimal charging of capacitors. *IEEE Transactions on Circuits and Systems I: Fundamental Theory and Applications,* July 2000, vol. 47 (7), 1009-1016
- Adiabatic charging of capacitors by switched capacitor converters with multiple target voltages. **D. CHERNICHENKO ; A. KUSHNEROV ; S. BEN-YAAKOV.** 2012 IEEE 27th Convention of Electrical and Electronics Engineers in Israel. IEEE, November 2012, 1-4
- **Y. LEI ; R. C. N. PILAWA-PODGURSKI.** Analysis of switched-capacitor DC-DC converters in soft-charging operation. *Control and Modeling for Power Electronics (COMPEL), 2013 IEEE 14th Workshop on IEEE,* June 2013, 1-7
- **Y. LEI ; R. C. PILAWA-PODGURSKI.** A general method for analyzing resonant and Soft-Charging operation of Switched-Capacitor converters. *Power Electronics, IEEE Transactions on,* October 2015, vol. 30 (10), 5650-5664
- **M.S. MAKOWSKI.** A canonical switched capacitor DC-DC converter. *Control and Modeling for Power Electronics (Compel), 2014 15th IEEE Workshop on IEEE,* June 2014, 1-8